# EUROPEAN PATENT SPECIFICATION

(11) **EP 3 668 303 B1**
(45) Date of publication and mention of the grant of the patent: **24.11.2021**
(21) Application number: 18766054.3
(22) Date of filing: 13.08.2018
(51) Int. Cl.: A01D 80/02, A01D 89/00

(54) **TOOL FOR AGRICULTURAL EQUIPMENT**
WERKZEUG FÜR LANDWIRTSCHAFTLICHE AUSRÜSTUNG
OUTIL POUR ÉQUIPEMENT AGRICOLE

(30) Priority: 16.08.2017 IT 201700093892; 03.11.2017 IT 201700125521
(43) Date of publication of application: 24.06.2020
(73) Proprietor: IL. MAS S.R.L., 33020 Sutrio (UD) (IT)
(72) Inventor: BIASIZZO, Matteo, 33170 Pordenone (IT)
(74) Representative: Petraz, Gilberto Luigi
(86) International application number: PCT/IT2018/050153
(87) International publication number: WO 2019/035147

(56) References cited:
- EP-A1- 1 967 060
- WO-A1-2017/059170
- AU-A- 327 966
- CA-A- 1 089 656
- DE-B- 1 090 019
- GB-A- 241 003
- US-A- 3 597 910
- US-A- 4 145 866

## Description

### FIELD OF THE INVENTION

The present invention concerns a tool for agricultural equipment, in particular for collecting, windrowing, displacing, loading, lifting and/or moving agricultural products.

By way of non-restrictive example, the agricultural equipment can comprise stellar wheels, loading devices, toothed belts, or suchlike, with which the tools according to the invention are associated.

The agricultural equipment can be installed and become an integral part of a farm machine such as haymaking machines, baling presses for round or square bales, stellar or belt swathers, tedders, threshers, forage carts or suchlike.

Here and hereafter in the description, the term "agricultural products" means a product chosen from the group comprising hay and its derivatives, corn, wheat straw, rice straw or other types of straw, fodder, legume fodder, sugar cane, corn stalks, or suchlike.

### BACKGROUND OF THE INVENTION

Agricultural machines are known, such as swathers, to collect in windrows hay, fodder, straw or agricultural products in general.

For this purpose, swathers are provided with a plurality of tools, also known as "teeth", able to exert a grip on the agricultural products to allow them to be worked.

The tools are generally defined by the special shaping of an oblong metal bar. These tools are installed radially on a central body to define a stellar wheel of the swather. The swather is in fact usually provided with a plurality of stellar wheels installed in a known manner on a support structure.

The tools therefore each define a tooth, having a first end constrained to the central body and a second free end.

The tools thus defined have a rather smooth external surface.

One disadvantage of these known tools, as well as of the agricultural equipment comprising the tools, is the poor efficiency of being able to properly collect/move the agricultural products present in the ground. Moreover, in order to guarantee an acceptable action of collecting the agricultural products, it is known to increase the pressure that the tools are able to exert on the ground. This, however, determines a contamination of the agricultural product moved, that is, inside the collected product there will be more soil, roots, stones or other foreign bodies that are indigestible and prevent or limit the optimal feeding of the animals.

A tool for collecting agricultural products is also known from document EP-A-1.967.060, provided with two teeth each having a mainly oblong development and provided at one end with a portion bent in a hook to define a curved hook. Along the length of each tooth, distanced from the end where the curved hook is present, protrusions are attached which are suitable to increase the action of gripping the agricultural products. A tool is also known from the same document for collecting agricultural products provided with two teeth, each of which is suitably shaped according to a helical development to follow the profile of a thread.

From document GB-A-241.003 tools are known for collecting agricultural products provided with a shaped tooth so as to define a plurality of lateral rings lying on a common plane and separated from each other by rectilinear portions. The last lateral ring ends with a pointed portion. From the same document GB-A-241.003 the tooth is shaped to form an open coil, wave-shaped or curved, which extends over the entire length of the tooth. This wave or curve lies substantially on the same lying plane. Also in GB-A-241.003 a tooth is described for collecting agricultural products which is made from a flat-shaped metal bar and in which a longitudinal edge of the tooth is notched or provided with an irregular surface for the purpose of retaining the agricultural products that are collected.

A tool for collecting agricultural products is also known from document US-A-4.145.866, which is defined by an elastic tubular material such as spring steel in which a flexible core such as a cable of steel wires is inserted. In proximity to each free end of the tool there are indentations located in the tubular material, the function of which is to grip the flexible core inside the tubular cavity of the external elastic material.

In document DE-B-10.90.019 a tool for collecting agricultural products is described which is defined by three strands, that is, the twisting of three steel wires.

The solutions described in the above documents, however, are particularly complex to carry out and involve extremely high costs of the final tool.

Moreover, the surface irregularities that are obtained on the teeth are extremely accentuated and determine problems of too accentuated a retention, that is, the agricultural products are not released, and therefore remain adherent to the tool even after the collecting action performed by the agricultural equipment.

The accumulation of agricultural products on the teeth makes the agricultural equipment completely ineffective in its collecting action and requires operators to intervene manually to remove them, sometimes causing problems of safety for the operators.

There is therefore a need to make a tool for agricultural equipment which overcomes at least one of the disadvantages of the state of the art.

One purpose of the present invention is to provide a tool for agricultural equipment that allows to increase the efficiency of action exerted by the tool on the agricultural products to be lifted and/or moved.

Another purpose is to make a tool which is simple and economical.

Another purpose is to make a tool for agricultural equipment that can also be used on known agricultural equipment.

Another purpose is to make a tool for agricultural equipment which allows to increase the efficiency and productivity of the agricultural equipment and machines provided with such tools.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a tool for agricultural equipment to collect agricultural products such as a swather, thresher, press or suchlike, comprises at least an oblong bar shaped to define a tooth.

In accordance with one aspect of the present invention, at least one longitudinal portion of the bar is provided with a plurality of surface irregularities provided to increase the action of collecting the agricultural products.

The longitudinal portion, in which the surface irregularities are made, extends from a free end of the bar toward the inside of the latter and for a length comprised between 10 mm and 250 mm. Moreover, the surface irregularities are chosen from either knurls or threading, are uniformly distributed along the entire longitudinal portion of the bar and have a roughness comprised between 0.1 mm and 2.0 mm. The surface irregularities are knurls having an inclination with respect to an axis of the bar comprised between 10^{o} and 170^{o}, preferably between 45^{o} an 135^{o}.

The presence of surface irregularities allows to increase the gripping action of the agricultural product, usually forage or straw, in order to allow its movement.

The tool can therefore be installed on a piece of equipment, together with other similar tools, and allows to increase the efficiency of the agricultural equipment.

The choice of these values of roughness allows to equip the tool with a sufficient gripping and holding action of the agricultural products, and at the same time ensure that in any case the products are released onto the ground once the collecting action has been done by the agricultural equipment. The particular configuration of the surface irregularities of the present invention allows in fact to exert a particularly efficient collecting action and, at the same time, allows to prevent the formation of accumulations on the tool.

In accordance with a possible solution, the bar is made of metal material. The material allows the bar to resist stresses to which it is subjected during use.

In accordance with a possible solution, the surface irregularities are made directly on the external surface of the bar in a single body.

According to variant embodiments, the bar comprises an oblong central core and a covering body attached externally on at least part of the core and the plurality of surface irregularities is provided on the covering body.

In accordance with a possible solution, the covering body is integrally attached to the central core by welding. According to a variant embodiment, the covering body is attached to the central core by gluing.

Embodiments of the present invention also concern a piece of agricultural equipment provided with a plurality of tools as described above and associated with at least one support body.

Other embodiments of the present invention also concern an agricultural machine.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a front view of a tool in accordance with the present invention;
- fig. 2 is a lateral view of the tool of fig. 1 resting on a plane;
- fig. 3 is a perspective view of another embodiment of the present invention;
- fig. 4 is an enlargement of a free end of a tool in accordance with the present invention;
- fig. 5 is a variant of fig. 4;
- fig. 6 is another variant of fig. 4;
- fig. 7 is another variant of fig. 4;
- fig. 8 is another variant of fig. 4;
- fig. 9 is another variant of fig. 4;
- fig. 10 is a view from above of a possible piece of agricultural equipment provided with tools in accordance with the present invention;
- fig. 11 is a section view of a possible variant embodiment of the present invention;
- fig. 12 is a schematic perspective view of a possible solution of fig. 11;
- fig. 13 is an exploded view of the present invention in accordance with another variant embodiment;
- fig. 14 is a section view of a variant of fig. 11.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof.

Before describing these embodiments, we must also clarify that the present description is not limited in its application to details of the construction and disposition of the components as described in the following description using the attached drawings. . We must also clarify that the phraseology and terminology used here is for the purposes of description only, and cannot be considered as limitative.

With reference to the attached drawings, a tool for agricultural equipment 20 according to the present invention is indicated in its entirety by the reference number 10, 110.

The tool 10, 110 comprises at least one oblong bar 11 shaped to define at least one tooth 19.

By way of example only, the bar 11 can be made, or at least partly made, of a metal material such as steel, preferably harmonic steel suitable to resist the stresses of bending fatigue to which these tools are normally subjected during use.

According to a variant embodiment, the bar 11 can be made of a composite material, for example comprising reinforcement fibers such as, by way of example only, glass, carbon, boron, basalt, or aramid fibers, immersed in a polymerized binder resin.

According to a possible solution of the invention, the bar 11 can be made, or at least partly made, of carbon.

In particular, the bar 11 extends along an axis A which can have a rectilinear, curved or mixed rectilinear and curved development.

According to a possible solution of the invention, the tool is defined only by the bar 11.

According to another aspect of the invention, the bar 11 is made in a single body with a metal material.

The bar 11 can have a circular or polygonal cross section.

Moreover, by way of example only, the bar 11 can have a diameter, or equivalent diameter, D comprised between about 4 mm and about 15 mm, preferably between 5 mm and 10 mm.

According to one aspect of the present invention, the tool 10, 110 comprises at least a longitudinal portion 15 of the bar 11 provided with a plurality of surface irregularities 18.

According to another aspect of the present invention, the surface irregularities 18 are uniformly distributed along the entire longitudinal portion 15 of the bar 11.

In particular, the surface irregularities 18 can be uniformly distributed over the entire perimeter of the longitudinal portion 15.

According to a possible solution, the surface irregularities 18 are reciprocally disposed along the longitudinal extension of the longitudinal portion with a maximum reciprocal distance of about 8mm, preferably about 5mm.

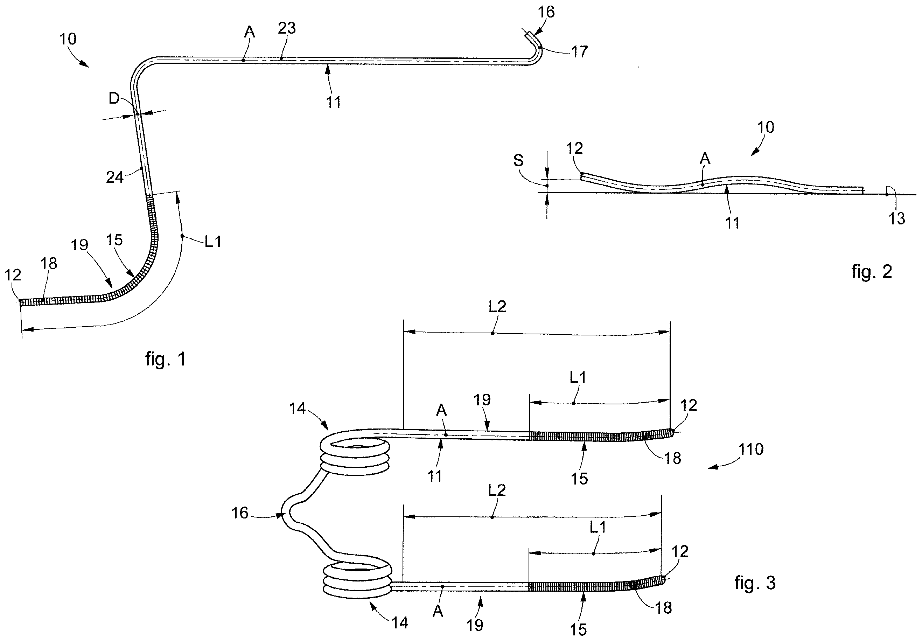

In accordance with a possible solution (figs. 1, 3-9), the surface irregularities 18 can be made in a single body on the external surface of the bar 11.

According to one embodiment, the longitudinal portion 15 in which the surface irregularities 18 are made extends from a free end 12 of the bar 11 toward its inside.

In fact it is known that the end portion is the one most affected by the passage of the agricultural product, and this positioning of the surface irregularities prevents the agricultural product from slipping/sliding, thus escaping the action of retaining/moving the agricultural product.

According to possible embodiments, the surface irregularities 18 can have a roughness greater than or equal to 0.1 mm.

In some embodiments, the surface irregularities 18 have a roughness comprised between 0.1 mm and 2 mm, preferably between 0.1 mm and 1 mm, even more preferably between 0.4 mm and 0.7 mm.

Advantageously, the surface irregularities 18 of the at least one longitudinal portion 15 allow to increase the friction, during use, between the longitudinal portions 15 and the agricultural products, improving the grip of the tools 10, 110 on the agricultural products.

In accordance with possible solutions, the surface irregularities 18 are made by removing material from the bar 11. This solution allows to make surface irregularities 18 on the surface of the longitudinal portion 15 of extremely small size and such as to ensure an effective collecting action, but also the subsequent release of the agricultural product once collected.

The present invention, therefore, allows to increase the efficiency and productivity of the agricultural equipment provided with the tools 10, 110.

According to one embodiment, the longitudinal portion 15 where the surface irregularities 18 are present extends for a length L1 comprised between 10 mm and 250 mm. According to a preferential embodiment, the longitudinal portion 15 where the surface irregularities 18 are present extends for a length comprised between 50 mm and 150 mm.

According to possible embodiments, shown merely by way of non-restrictive example in fig. 1, the tool 10 can be substantially flat, that is, its shaped development lies on a single plane.

According to a variant, shown in fig. 2, the tool 10 is shaped in a three-dimensional manner and can have a deviation S of the axis A with respect to an abutment plane 13 which can be comprised between 5 mm and 50 mm.

According to a possible solution, the bar 11 can be made in a single body. This solution allows to optimize the sizes and resistance of the tool 10, 110.

According to an alternative, the bar 11 can be made in two or more components, reciprocally connected to each other.

According to one embodiment, it can be provided that the longitudinal portion 15 is a separate component of the tool and can be selectively coupled therewith by mechanical connections, for example by threaded connections.

According to possible embodiments, the tools 10, 110 can be provided with an attachment portion 16 which allows to connect the tool 10, 110, for example, to a support body of agricultural equipment, as will be described hereafter.

The attachment portion 16 can be obtained by shaping the bar 11.

According to possible embodiments, the attachment portion 16 can define a hook 17, as shown merely by way of example in fig. 1.

The attachment portion 16 can be provided in correspondence with one end of the bar 11, as shown by way of example in fig. 1.

According to a variant, shown in fig. 3, the attachment portion 16 can be provided in correspondence with an intermediate zone of the bar 11.

According to possible embodiments, shown in fig. 3, the tool 110 can be provided, along its longitudinal development, with one or more elastic portions 14.

The elastic portions 14 can have a substantially helical, or spring-like development.

According to one solution, the elastic portions 14 are made in a single body, for example by shaping the bar 11.

The elastic portions 14 allow to confer on the tooth 19 or teeth 19 a sufficient elastic deformation capacity suitable to allow the tool not to break in the event of collision with bodies.

In accordance with a possible solution, shown merely by way of example in fig. 1, the tool 10 is shaped so as to define the attachment portion 16, a rod-like portion 23 and a hook portion 24 that extends as far as the free end 12 of the tooth 19. The portions 16, 23, 24 are made in a single body one after the other. The hook portion 24 extends angled with respect to the rod-like portion 23, for example by an angle comprised between 60° and 120°.

The hook portion 24 can be L-shaped to define the tooth 19.

According to possible embodiments, shown only by way of example in fig. 3, the bar 11 can be shaped so as to define at least two teeth 19, each provided with a free end 12 as described above.

According to possible embodiments, shown merely by way of example in fig. 3, the bar 11 can be U-shaped, having two parallel segments defining the teeth 19, and a connection segment connecting the parallel segments in correspondence with respective ends. The connection segment defines the attachment portion 16 in correspondence with which the tool 110 is connected to a support body 21 of the agricultural equipment 20.

The elastic portions 14 can be provided between the parallel segments and the connection segment.

Each of the teeth 19 can have a substantially rectilinear development.

In accordance with the solution shown in fig. 3, at least one of the teeth 19 is provided with the longitudinal portion 15 in which the surface irregularities 18 are made.

In particular, the teeth 19 can extend for a length L2 and the longitudinal portion 15, in which the surface irregularities 18 are provided, extends for a length L1 equal to or less than the length L2 of the teeth 19.

If two or more teeth 19 are provided with respective longitudinal portions 15, the lengths of the latter, and possibly the position, can be different from one another.

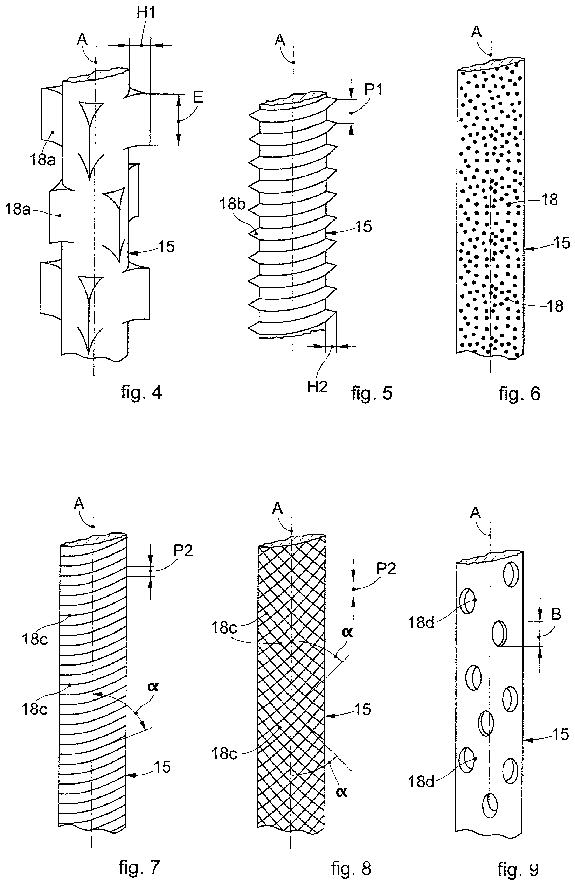

According to possible embodiments, shown merely by way of non-restrictive example in fig. 4, the surface irregularities 18 can be obtained by a stapling operation.

By way of non-restrictive example only, the stapling operation provides to plastically deform zones of the bar 11, generating ridges which develop radially to the axis A.

The surface irregularities 18 obtained as a result of a stapling operation can be defined as spurs, or pins, 18a, having a height H1 and an extension E.

Advantageously, the height H1 can be comprised between 0.05 and 0.4 times the diameter D of the bar 11.

By way of example only, the height H1 can be comprised between about 1 mm and about 15 mm.

Advantageously, the extension E of the pins 18a can be comprised between 0.05 and 0.3 times the length L1 of the longitudinal portion 15.

By way of example only, the extension E can be comprised between about 1 mm and about 15 mm.

According to possible embodiments, shown only by way of example in fig. 5, the surface irregularities 18 can be obtained by means of one or more threads of the bar 11, or part of it.

According to possible embodiments, the threads can overlap and cross each other.

The surface irregularities 18 therefore comprise threads 18b having a pitch P1 and a height H2.

The pitch P1 can be comprised between 0.05 mm and 5 mm.

The height H2 can be comprised between 0.02 and 0.2 times the diameter D of the bar 11. The profiles of the threads 18b can be triangular, trapezoidal, saw-toothed, or suchlike.

According to possible embodiments (fig. 6), the surface irregularities 18 can be defined by a plurality of surface incisions obtained for example by an operation of abrasion of the bar 11, such as a sanding, grinding or suchlike, or by a chemical engraving with one or more solvents, or suchlike.

According to other possible embodiments (figs. 7 and 8), the surface irregularities 18 can be obtained by one or more knurling operations, for example.

It is not excluded, however, that the surface irregularities 18 can be obtained by molding operations.

In particular, if the bar 11 is metal, or at least partly metal, the surface irregularities 18 can be made by molding, or by plastic deformation of the material that makes up the bar 11.

If the bar 11 is made of a composite material, it can be provided that the surface irregularities 18 are made directly in the production mold, that is, when the bar 11 is formed.

Consequently, the surface irregularities 18 are defined by knurls 18c. The knurls 18c can have an inclination a with respect to the axis A which is comprised between about 10° and about 170°, preferably comprised between about 45° and about 135°.

According to possible embodiments, the knurls 18c can be located parallel to each other and distanced by a pitch P2, uniform or variable from one another.

The pitch P2 can be comprised between about 0.5 mm and about 5 mm.

According to other solutions (fig. 8), the knurl 18c is defined by a first series of knurls 18c located substantially parallel to each other and by at least a second series of knurls 18c transverse to the first series.

According to other variant embodiments (fig. 9), the surface irregularities 18 can be defined by a plurality of holes 18d, made transversely to the axis A.

According to possible embodiments, the holes 18d can have a diameter B comprised between about 2 mm and about 5 mm.

According to possible embodiments, the holes 18d can be through or blind.

It is understood that the surface irregularities 18 can be made, in replacement or in addition, in various other ways, for example by laser engraving.

According to the present invention, moreover, the longitudinal portion 15 of the bar 11 can also have a combination of types of surface irregularities 18 as described above.

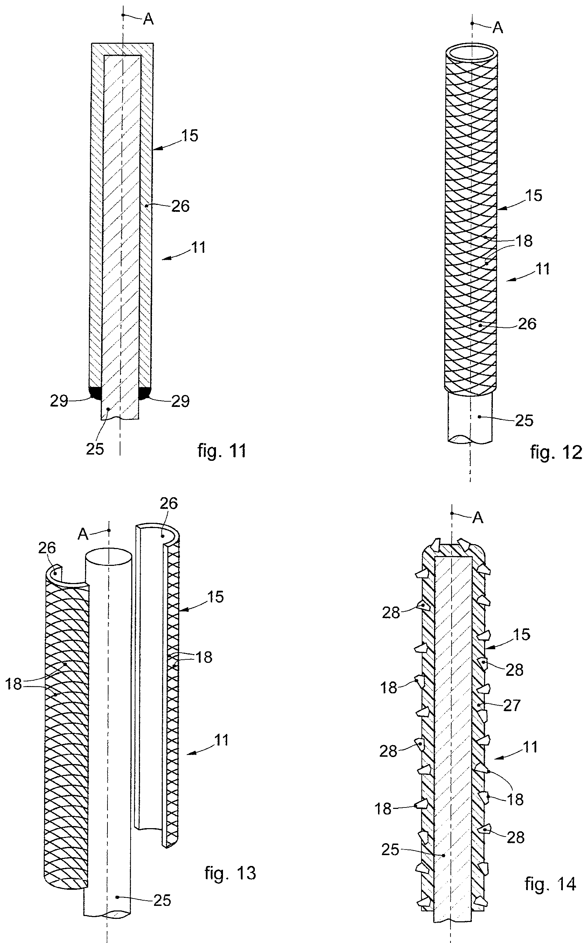

In accordance with possible solutions, described merely by way of example with reference to figs. 11-13, the bar 11 comprises, or is defined by, an oblong central core 25 and a covering body 26 externally attached on at least part of the central core 25.

The central core 25 has a structural function and the function of resisting the mechanical stresses to which the bar 11 is subjected during use.

According to a possible solution, the central core 25 can be made of metal material, for example steel as described above, or alternatively it can be made of a composite material.

According to a possible solution, the central core 25 can be made from a metal stem obtained in a single body.

The plurality of surface irregularities 18 described above are provided on the covering body 26. The surface irregularities 18 can be made on the covering body 26 according to one or the other of the methods described above, for example with reference to figs. 2-9.

The covering body 26 can define the longitudinal portion 15 of the bar 11, and can therefore be provided, on its entire external surface, with the surface irregularities 18.

According to a variant embodiment, the central core 25 can develop for the entire longitudinal extension of the bar 11.

The covering body 26 can be made of a metal material which is integrally attached to the central core 25.

In accordance with a possible solution, the covering body 26 is integrally attached to the central core 25 by welding, for example with weld points 29 as shown in fig. 11.

According to a possible solution, the covering body 26 can be made of a polymer material, for example polyethylene, or polyamide.

According to this embodiment, it can be provided that the surface irregularities 18 are made by molding, or by incision of the external surface of the covering body 26.

According to a variant embodiment, the surface irregularities 18 are defined by fragments, for example as described below, incorporated in part of the thickness of the covering body 26 and protruding on its external surface to define the surface irregularities 18.

According to a variant embodiment, the covering body 26 is attached to the central core 25 by gluing.

According to another variant embodiment, the covering body 26 is attached to the central core 25 by mechanical connections, for example by threaded connections.

According to one solution, the covering body 26 is attached to the central core 25 by means of a pin inserted in a through hole made in the central core 25 and in the covering body 26.

According to a possible variant embodiment, the covering body 26 can be attached integrally to the core by means of a plastic deformation thereof against the central core 25.

According to another embodiment, the covering body 26 can be constrained to the central core 25 by mechanical interference.

The covering body 26 can have a substantially tubular shape and is inserted on the central core 25 (fig. 12).

According to a possible solution, the covering body 26 can be defined by two or more shells (fig. 13) attached to the central core 25, for example by welding and/or gluing.

According to a possible solution, the shells can be first connected to each other, by gluing or welding, and subsequently connected to the central core 25.

According to a possible variant embodiment (fig. 14), the bar 11 comprises an oblong central core 25 covered, for at least part of its length, with a covering layer 27. The covering layer 27 is also provided with fragments 28, at least some of which protrude from the covering layer 27 and define the surface irregularities 18.

The covering layer 27 can be made of a polymer material such as, by way of example only, a polyester, phenolic, epoxy, ethylene, amide or vinylester resin, or suchlike.

According to a possible solution, it can be provided that the covering layer 27 is applied on at least part of the length of the central core 25, in a resinous form, for example by immersion, or by spraying and, afterward, and before the covering layer 27 is polymerized, the fragments 28 are applied, which are therefore at least partly incorporated in the covering layer 27.

According to an alternative, the covering layer 27 can be provided in resinous form and incorporates the fragments 28 inside it. The covering layer 27 is applied on part of the central core 25 and the subsequent cross-linking of the resin puts the fragments 28 in a surface protruding position so as to define the surface irregularities 18.

The fragments 28 can be defined by mineral particles, glass, metal oxides, or suchlike.

Embodiments of the present invention also concern agricultural equipment 20 provided with one or more tools 10,110 as described above associated with at least one support body 21 provided to support the one or more tools 10, 110.

In particular, it can be provided that the tools 10, 110 are attached to the support body 21 by means of their attachment portions 16. In this way each tool 10, 110 has one end protruding cantilevered with respect to the support body 21 and defining the free end 12 of the tooth 19.

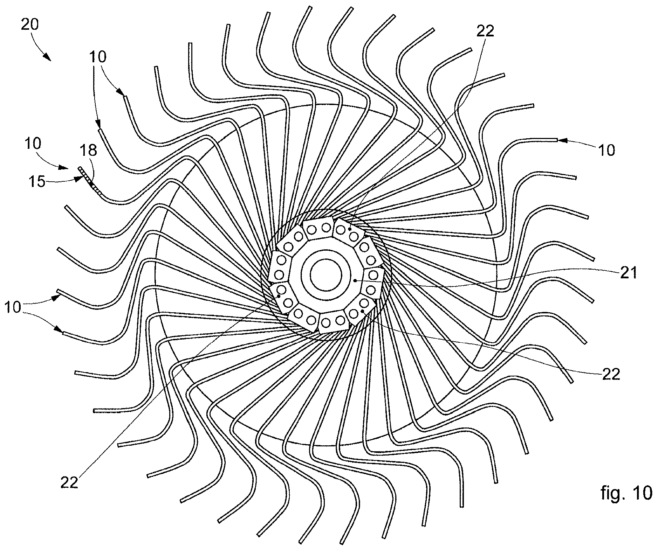

Fig. 10 shows, by way of non-restrictive example only, a stellar wheel 20 of a stellar swather in which the support body 21 is defined by a supporting disk on which the tools 10 are attached by attachment elements 22.

In particular, the tools 10 are installed angularly distanced from each other along the development of the support disk and protrude radially from the latter.

By way of example only, the tool 110 shown in fig. 3 can be associated with a belt swather, a tedder, or loading systems for agricultural presses or forage carts.

Furthermore, it is not excluded that the present invention can also be applied in agricultural machines other than a swather. The present invention can also refer to an agricultural machine (not shown) which comprises one or more pieces of agricultural equipment 20. By way of example only, the agricultural machines can be chosen from a group comprising haymaking machines, baling presses for round or square bales, stellar or belt swathers, tedders, threshers, forage carts, or suchlike.

It is clear that modifications and/or additions of parts can be made to the tools for agricultural equipment as described heretofore, without departing from the field and scope of the present invention.

By way of example only, it is possible to provide that the bar 11 can be subjected to a heat treatment, for example to a hardening treatment, in order to increase the mechanical resistance to the stresses to which the tool is subjected.

It is also clear that, although the present invention has been described with reference to some specific examples, a person of skill in the art shall certainly be able to achieve many other equivalent forms of tools for agricultural equipment, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Tool for agricultural equipment to collect agricultural products, such as forage or straw, said tool comprising at least an oblong bar (11) shaped to define at least one tooth (19) at a free end (12), and wherein at least one longitudinal portion (15) of said bar (11) is provided with a plurality of surface irregularities (18) to increase the action of collecting said agricultural products, **characterized in that** said longitudinal portion (15) in which said surface irregularities (18) are made extends from the free end (12) of said bar (11) toward the inside of the latter and for a length (L1) of said longitudinal portion (15) comprised between 10 mm and 250 mm, **in that** said surface irregularities (18) are knurls (18c) uniformly distributed along the entire longitudinal portion (15) of the bar (11) and have a roughness comprised between 0.1 mm and 2.0 mm **and in that** said knurls (18c) have an inclination with respect to an axis (A) of said bar (11) comprised between 10° and 170°, preferably between 45° and 135°.

2. Tool as in claim 1, **characterized in that** said surface irregularities (18) are defined by a first series of knurls (18c) located substantially parallel to each other and by at least a second series of knurls (18c) transverse to the first series.

3. Tool as in claim 1 or 2, **characterized in that** said surface irregularities (18) are reciprocally disposed along the longitudinal extension of the longitudinal portion with a maximum reciprocal distance of about 8 mm, preferably about 5 mm.

4. Tool as in any claim hereinbefore, **characterized in that** said longitudinal portion (15) where there are said surface irregularities (18) extends for a length (L1) comprised between 50 mm and 150 mm.

5. Tool as in any claim hereinbefore, **characterized in that** said surface irregularities (18) are uniformly distributed on the entire perimeter of the longitudinal portion (15).

6. Tool as in any claim hereinbefore, **characterized in that** said surface irregularities (18) are made by removing material from said bar (11).

7. Tool as in any claim hereinbefore, **characterized in that** said knurls (18c) are located parallel to each other and distanced by a pitch (P2) comprised between about 0.5 mm and about 5 mm.

8. Tool as in any claim hereinbefore, **characterized in that** said tool is defined only by said bar (11) having a circular cross section and in which said surface irregularities (18) are made in a single body on the external surface of said bar (11).

9. Tool as in any claim from 1 to 7, **characterized in that** said bar (11) comprises an oblong central core (25) and a covering body (26) attached externally on at least part of said central core (25), said plurality of surface irregularities (18) being provided on said covering body (26).

10. Tool as in claim 9, **characterized in that** said covering body (26) has a substantially tubular shape and is inserted on said central core (25).

11. Tool as in claim 9 or 10, **characterized in that** said covering body (26) is integrally attached to said central core (25) by welding.

12. Tool as in claim 9 or 10, **characterized in that** said covering body (26) is attached to said central core (25) by gluing.

13. Tool as in claim 9 or 10, **characterized in that** said covering body (26) is attached to said central core (25) by mechanical connections.

14. Agricultural equipment provided with a plurality of tools (10, 110) as in any claim hereinbefore associated with at least one support body (21).

15. Agricultural equipment as in claim 14, **characterized in that** said support body (21) is defined by a support disk on which said tools (10) are attached with attachment elements (22).

16. Agricultural equipment as in claim 15, **characterized in that** said tools (10) are installed angularly distanced from each other along the development of said support disc and extend radially from the latter.

17. Agricultural machine comprising at least one piece of agricultural equipment (20) as in any of the claims from 14 to 16.

## Patentansprüche

1. Werkzeug für landwirtschaftliche Ausrüstung zum Aufnehmen landwirtschaftlicher Produkte, wie beispielsweise Viehfutter oder Stroh, wobei das Werkzeug mindestens eine längliche Stange (11) umfasst, die so geformt ist, dass sie mindestens einen Zinken (19) an einem freien Ende (12) definiert, und wobei mindestens ein längsverlaufender Abschnitt (15) der Stange (11) mit einer Vielzahl von Oberflächenunregelmäßigkeiten (18) versehen ist, um die Wirkung des Aufnehmens der landwirtschaftlichen Produkte zu erhöhen, **dadurch gekennzeichnet, dass** der längsverlaufende Abschnitt (15), in dem die Oberflächenunregelmäßigkeiten (18) ausgebildet sind, sich von dem freien Ende (12) der Stange (11) in Richtung Innenseite der letzteren und über eine Länge (L1) des längsverlaufenden Abschnitts (15) von 10 mm bis 250 mm erstreckt, **dass** die Oberflächenunregelmäßigkeiten (18) Rändel (18c) sind, die gleichmäßig entlang des gesamten längsverlaufenden Abschnitts (15) der Stange (11) verteilt sind und eine Rauigkeit von 0,1 mm bis 2,0 mm aufweisen, **und dass** die Rändel (18c) eine Neigung in Bezug auf eine Achse (A) der Stange (11) von 10° bis 170°, vorzugsweise von 45° bis 135°, aufweisen.

2. Werkzeug gemäß Anspruch 1, **dadurch gekennzeichnet, dass** die Oberflächenunregelmäßigkeiten (18) durch eine erste Reihe von Rändeln (18c), die im Wesentlichen parallel zueinander angeordnet sind, und durch mindestens eine zweite Reihe von Rändeln (18c), die quer zu der ersten Reihe verläuft, definiert werden.

3. Werkzeug gemäß Anspruch 1 oder 2, **dadurch gekennzeichnet, dass** die Oberflächenunregelmäßigkeiten (18) wechselseitig entlang der Längserstreckung des längsverlaufenden Abschnitts mit einem maximalen wechselseitigen Abstand von etwa 8 mm, vorzugsweise etwa 5 mm, angeordnet sind.

4. Werkzeug gemäß irgendeinem vorhergehenden Anspruch, **dadurch gekennzeichnet, dass** der längsverlaufende Abschnitt (15), in dem die Oberflächenunregelmäßigkeiten (18) vorliegen, sich über eine Länge (L1) von 50 mm bis 150 mm erstreckt.

5. Werkzeug gemäß irgendeinem vorhergehenden Anspruch, **dadurch gekennzeichnet, dass** die Oberflächenunregelmäßigkeiten (18) gleichmäßig auf dem gesamten Umfang des längsverlaufenden Abschnitts (15) verteilt sind.

6. Werkzeug gemäß irgendeinem vorhergehenden Anspruch, **dadurch gekennzeichnet, dass** die Oberflächenunregelmäßigkeiten (18) durch Entfernen von Material aus der Stange (11) hergestellt sind.

7. Werkzeug gemäß irgendeinem vorhergehenden Anspruch, **dadurch gekennzeichnet, dass** die Rändel (18c) parallel zueinander und in einem Abstand (P2) von etwa 0,5 mm bis etwa 5 mm angeordnet sind.

8. Werkzeug gemäß irgendeinem vorhergehenden Anspruch, **dadurch gekennzeichnet, dass** das Werkzeug nur durch die Stange (11) mit einem kreisförmigen Querschnitt definiert wird, wobei die Oberflächenunregelmäßigkeiten (18) in einem einzigen Körper auf der Außenfläche der Stange (11) ausgebildet sind.

9. Werkzeug gemäß irgendeinem der Ansprüche 1 bis 7, **dadurch gekennzeichnet, dass** die Stange (11) einen länglichen mittigen Kern (25) und einen Hüllkörper (26), welcher außen auf zumindest einem Teil des mittigen Kerns (25) befestigt ist, umfasst, wobei die Vielzahl an Oberflächenunregelmäßigkeiten (18) auf dem Hüllkörper (26) bereitgestellt wird.

10. Werkzeug gemäß Anspruch 9, **dadurch gekennzeichnet, dass** der Hüllkörper (26) eine im Wesentlichen tubuläre Form aufweist und auf den zentralen Kern (25) aufgesetzt ist.

11. Werkzeug gemäß Anspruch 9 oder 10, **dadurch gekennzeichnet, dass** der Hüllkörper (26) an dem mittigen Kern (25) durch Schweißen integral befestigt ist.

12. Werkzeug gemäß Anspruch 9 oder 10, **dadurch gekennzeichnet, dass** der Hüllkörper (26) an dem mittigen Kern (25) durch Verkleben befestigt ist.

13. Werkzeug gemäß Anspruch 9 oder 10, **dadurch gekennzeichnet, dass** der Hüllkörper (26) an dem zentralen Kern (25) durch mechanische Verbindungen befestigt ist.

14. Landwirtschaftliche Ausrüstung, die mit einer Vielzahl von Werkzeugen (10, 110) gemäß irgendeinem vorhergehenden Anspruch in Verbindung mit mindestens einem Trägerkörper (21) ausgestattet ist.

15. Landwirtschaftliche Ausrüstung gemäß Anspruch 14, **dadurch gekennzeichnet, dass** der Trägerkörper (21) durch eine Trägerscheibe definiert wird, auf der die Werkzeuge (10) mit Befestigungselementen (22) befestigt sind.

16. Landwirtschaftliche Ausrüstung gemäß Anspruch 15, **dadurch gekennzeichnet, dass** die Werkzeuge (10) winkelig im Abstand voneinander entlang der Erstreckung der Trägerscheibe montiert sind und sich radial von dieser erstrecken.

17. Landwirtschaftliche Maschine umfassend mindestens ein Teil einer landwirtschaftlichen Ausrüstung (20) gemäß irgendeinem der Ansprüche 14 bis 16.

## Revendications

1. Outil pour équipement agricole pour collecter des produits agricoles, tels que du fourrage ou de la paille, ledit outil comprenant au moins une barre oblongue (11) formée pour définir au moins une dent (19) à une extrémité libre (12), et dans lequel au moins une partie longitudinale (15) de ladite barre (11) est pourvue d'une pluralité d'irrégularités de surface (18) pour augmenter l'action de collecte desdits produits agricoles, **caractérisé en ce que** ladite partie longitudinale (15) dans laquelle lesdites irrégularités de surface (18) sont réalisées étendues depuis l'extrémité libre (12) de ladite barre (11) vers l'intérieur de cette dernière et sur une longueur (L1) de ladite partie longitudinale (15) comprise entre 10 mm et 250 mm, **en ce que** lesdites irrégularités de surface (18) sont des molettes (18c) réparties uniformément le long de toute la partie longitudinale (15) de la barre (11) et ont une rugosité comprise entre 0,1 mm et 2,0 mm, **et en ce que** lesdites molettes (18c) ont une inclinaison par rapport à un axe (A) de ladite barre (11) comprise entre 10° et 170°, de préférence entre 45° et 135°.

2. Outil selon la revendication 1, **caractérisé en ce que** lesdites irrégularités de surface (18) sont définies par une première série de molettes (18c) situées sensiblement parallèlement les unes aux autres et par au moins une seconde série de molettes (18c) transversales à la première série.

3. Outil selon la revendication 1 ou 2, **caractérisé en ce que** lesdites irrégularités de surface (18) sont disposées réciproquement le long de l'extension longitudinale de la partie longitudinale avec une distance réciproque maximale d'environ 8 mm, de préférence d'environ 5 mm.

4. Outil selon l'une quelconque des revendications précédentes, **caractérisé en ce que** ladite partie longitudinale (15) où se trouvent lesdites irrégularités de surface (18) s'étend sur une longueur (L1) comprise entre 50 mm et 150 mm.

5. Outil selon l'une quelconque des revendications précédentes, **caractérisé en ce que** lesdites irrégularités de surface (18) sont uniformément réparties sur tout le périmètre de la partie longitudinale (15).

6. Outil selon l'une quelconque des revendications précédentes, **caractérisé en ce que** lesdites irrégularités de surface (18) sont réalisées par enlèvement de matière de ladite barre (11).

7. Outil selon l'une quelconque des revendications précédentes, **caractérisé en ce que** lesdites molettes (18c) sont situées parallèlement les unes aux autres et espacées d'un pas (P2) compris entre environ 0,5 mm et environ 5 mm.

8. Outil selon l'une quelconque des revendications précédentes, **caractérisé en ce que** ledit outil est défini uniquement par ladite barre (11) ayant une section transversale circulaire et dans lequel lesdites irrégularités de surface (18) sont réalisées en un seul corps sur la surface externe de ladite barre (11).

9. Outil selon l'une quelconque des revendications 1 à 7, **caractérisé en ce que** ladite barre (11) comprend un noyau central oblong (25) et un corps de recouvrement (26) fixé extérieurement sur au moins une partie dudit noyau central (25), ladite pluralité d'irrégularités de surface (18) étant prévue sur ledit corps de recouvrement (26).

10. Outil selon la revendication 9, **caractérisé en ce que** ledit corps de recouvrement (26) a une forme sensiblement tubulaire et est inséré sur ledit noyau central (25).

11. Outil selon la revendication 9 ou 10, **caractérisé en ce que** ledit corps de recouvrement (26) est intégralement fixé audit noyau central (25) par soudage.

12. Outil selon la revendication 9 ou 10, **caractérisé en ce que** ledit corps de recouvrement (26) est fixé audit noyau central (25) par collage.

13. Outil selon la revendication 9 ou 10, **caractérisé en ce que** ledit corps de recouvrement (26) est fixé audit noyau central (25) par des liaisons mécaniques.

14. Equipement agricole pourvu d'une pluralité d'outils (10, 110) selon l'une quelconque des revendications précédentes associés à au moins un corps de support (21).

15. Equipement agricole selon la revendication 14, **caractérisé en ce que** ledit corps de support (21) est défini par un disque de support sur lequel lesdits outils (10) sont fixés avec des éléments de fixation (22).

16. Equipement agricole selon la revendication 15, **caractérisé en ce que** lesdits outils (10) sont installés à une distance angulaire les uns des autres le long du développement dudit disque de support et s'étendent radialement depuis ce dernier.

17. Machine agricole comprenant au moins une pièce d'équipement agricole (20) selon l'une quelconque des revendications 14 à 16.
